# EUROPEAN PATENT SPECIFICATION

(11) **EP 3 631 195 B1**
(45) Date of publication and mention of the grant of the patent: **23.06.2021**
(21) Application number: 18724289.6
(22) Date of filing: 22.05.2018
(51) Int. Cl.: F03D 1/06, B66C 1/10, F03D 13/10

(54) **WIND TURBINE INSTALLATION**
WINDKRAFTANLAGE INSTALLATION
INSTALLATION D'ÉOLIENNE

(30) Priority: 22.05.2017 NL 2018964
(43) Date of publication of application: 08.04.2020
(73) Proprietor: Baggermaatschappij Boskalis B.V., 3356 LK Papendrecht (NL)
(72) Inventor: VAN BERGEN, Marcel Remco Jochem, 3356 LK Papendrecht (NL); VAN GIFFEN, Ike Klaas, 3356 LK Papendrecht (NL)
(74) Representative: Geurts, Franciscus Antonius
(86) International application number: PCT/EP2018/063372
(87) International publication number: WO 2018/215458

(56) References cited:
- EP-A1- 2 574 773
- GB-A- 2 483 677
- JP-A- H06 257 555
- KR-A- 20140 001 704
- US-A1- 2010 313 417

## Description

### BACKGROUND

The invention relates to the installation of a wind turbine, in particular offshore.

Offshore wind turbines are usually installed by means of a jack up rig that carries the necessary parts of the wind turbine to an offshore wind turbine foundation. After the jack up rig has installed its legs onto the sea floor and has jacked up its hull, the wind turbine is installed by subsequently installing the tower in one or more tower sections, the nacelle, the hub and the blades. As the jack up rig is supported by the sea floor, the hoisting operations can be performed with high precision.

Due to an increased water depth for installation of offshore wind turbines and a need to reduce costs of offshore wind energy, the nominal power and therefore the weight of new wind turbines increases. This means that existing jack up rigs need to be upgraded with heavier cranes to install the heavier parts of these wind turbines. However, even with heavier cranes, the jack up operation for each individual wind turbine and sequentially lifting the individual components thereof remains a time consuming and weather dependent process.

KR 2014-0001704 discloses a traditional approach for building wind turbines. In this approach the blades are provisionally mounted around the tower to form a pre-assembly therewith. The nacelle with its hub is installed onto the pre-assembly in a separate hoisting operation after the pre-assembly itself has been installed. The pre-assembly comprises retaining units and blade posture adjusting units for the blades to temporarily mount the blades along the tower and to bring them towards the hub of the nacelle. The retaining units can be unfolded to in order to enlarge the distance between the blades and the tower and to dispose the blades at an angle to the tower. From this starting position the blade posture adjusting units can be powered to bring the blades in alignment with the hub to be mounted thereto. The blade posture adjusting units can make only small corrections of the position of the blades when compared to the unfolding movement of the retaining units.

It is an object of the present invention to enable a single lift installation of the offshore wind turbine onto the wind turbine foundation whereby the speed of the installation process is increased.

### SUMMARY OF THE INVENTION

According to a first aspect, the invention provides an assembly for installing a wind turbine onto a wind turbine foundation, comprising a tower, a nacelle on top of the tower that is rotatable around the longitudinal axis of the tower, a blade support for supporting blades, and at least two blades that are supported by the blade support along the tower, wherein the nacelle comprises a housing and a rotatable hub outside the housing for mounting the blades to the nacelle, wherein the hub comprises at least two first blade mountings and wherein the blades comprise a blade section and at one end thereof a second blade mounting for cooperation with one of the first blade mountings of the hub, wherein the blade support comprises a first holder that is mounted to the tower, a second holder that is mounted to the blade section of one of the blades and that keeps the engaged blade section spaced apart from the tower, and a hinge between the first holder and the second holder having its hinge axis perpendicular to the longitudinal axis of the tower, wherein the hinge axis has a fixed distance with respect to both the first holder and the second holder when hinging, wherein the blade is tiltable with respect to the tower by means of the blade support in a pure tilting movement around the hinge axis between a storage position in which the first blade mounting and the second blade mounting are spaced apart from each other, and a mounting position in which the first blade mounting is aligned with the second blade mounting to be mounted to each other.

The assembly according to the invention forms a pre-assembled wind turbine having blades that still need to be mounted to the hub of the nacelle. The second blade mounting on the blade can be brought in alignment with the first blade mounting on the hub by a pure tilting movement, that is, without translation of the blade with respect to the tower during the tilting movement between the storage position and the mounting position. This operation can be easily performed offshore without the actual presence of a crane vessel. The alignment of the blade mountings can be ensured beforehand when the assembly is assembled and tested onshore.

In an embodiment, in a projection parallel to the longitudinal axis of the tower, the second blade mounting extends in the storage position outside the circumscribed circle of the hub on the rotatable nacelle. This allows the hub of the nacelle to be rotated over a large angle with respect to its tower without being hampered by the blades along the tower.

In an embodiment the second holder of the blade support engages the blade section near or at the longitudinal center of gravity of the blade, whereby the tilting movement can be performed with relatively light tooling.

In an embodiment the assembly comprises a blade tip support for the blade that is supported by the blade support, wherein the blade tip support comprises a third holder that is mounted to the tower, and a fourth holder that is releasably mounted to the tip of the blade section of the blade and that keeps the tip at a fixed distance with respect to the tower in the storage position of the blade. The tip support temporarily fixates the blade along the tower. After the tip is released, the blade can easily tilt towards its mounting position.

In an embodiment the blade support comprises a slide bearing between the first holder and the second holder for translation of the second holder with respect to the first holder parallel to the longitudinal direction of the supported blade over a limited stroke, wherein the limited stroke allows translation of the blade in its mounting position between a first position in which the first blade mounting is aligned with the second blade mounting, and a second position in which the first blade mounting is in abutment with the second blade mounting. The slide bearing supports a limited stroke of the blade with respect to the hub from the first position in which there may be some play between the blade mountings, to its final mounted position without play between the blade mountings.

In an embodiment thereof the slide bearing carries the second holder at the begin of the limited stroke, whereby in the first position the weight of the blade is mainly carried by the blade support.

In an embodiment the blade support comprises for each blade a first holder and a hinge between the first holder and the second holder having its hinge axis perpendicular to the longitudinal axis of the tower, wherein each hinge axis has a fixed distance with respect to both the first holder and the second holder when hinging, whereby the tilting operation can be performed successively for all blades.

In an embodiment thereof the blades form a group of blades with its center of mass at one side of a notional vertical plane through which the longitudinal axis of the tower extends.

In an embodiment thereof the center of mass of the group of blades extends with respect to the notional vertical plane at the opposite side of the center of mass of the nacelle, whereby the tower may hang vertical when it is lowered to its wind turbine foundation.

According to a second aspect, the invention provides a method for installing a wind turbine offshore onto a wind turbine foundation by means of a crane vessel, wherein the crane vessel comprises a hull with a deck, a crane on the deck, and on the deck an assembly for installing a wind turbine, wherein the assembly comprises a tower, a nacelle on top of the tower that is rotatable around the longitudinal axis of the tower, a blade support for supporting blades, and at least two blades that are supported by the blade support along the tower, wherein the nacelle comprises a housing and a rotatable hub outside the housing for mounting the blades to the nacelle, wherein the hub comprises at least two first blade mountings and wherein the blades comprise a blade section and at one end thereof a second blade mounting for cooperation with one of the first blade mountings of the hub, wherein the blade support comprises a first holder that is mounted to the tower, a second holder that is mounted to the blade section of one of the blades and that keeps the engaged blade section spaced apart from the tower, and a hinge between the first holder and the second holder having its hinge axis perpendicular to the longitudinal axis of the tower, wherein the hinge axis has a fixed distance with respect to both the first holder and the second holder when hinging, wherein the blade is tiltable with respect to the tower by means of the blade support in a pure tilting movement around the hinge axis between a storage position in which the first blade mounting and the second blade mounting are spaced apart from each other, and a mounting position in which the first blade mounting is aligned with the second blade mounting to be mounted to each other, wherein the method comprises shipping the crane vessel to an offshore wind turbine foundation, by means of the crane lifting the assembly from the deck and installing the tower thereof on the wind turbine foundation, and tilting the blade from its storage position to its mounting position according to the pure tilting movement whereby the first blade mounting and the second blade mounting become aligned, and mounting the first blade mounting and second mounting to each other.

The method according to the invention is performed by means of a crane vessel, wherein the assembly to be installed is provided with the features according to the invention. The crane vessel may have enough capacity to ship and install multiple assemblies in one journey, which decreases the total vessel time per wind turbine.

In an embodiment, in a projection parallel to the longitudinal axis of the tower, the second blade mounting extends in the storage position outside the circumscribed circle of the hub on the rotatable nacelle, wherein the method comprises mounting one of the blades to the hub and subsequently rotating the nacelle with the mounted blade to align it with the blade in the blade support while this blade is in its storage position.

In an embodiment the blade support comprises for each blade a first holder and a hinge between the first holder and the second holder having its hinge axis perpendicular to the longitudinal axis of the tower, wherein each hinge axis has a fixed distance with respect to both the first holder and the second holder when hinging, wherein the method comprises for each blade tilting the blade from its storage position to its mounting position and mounting the blade to the hub.

In an embodiment the crane keeps the assembly with its tower upright above the wind turbine foundation and spaced apart from it, wherein pulling wires are tightened up between the wind turbine foundation and the bottom of the tower, wherein the pulling wires pull the tower towards the wind turbine foundation. In this manner the pulling wires define the distance between the tower and the wind turbine foundation, whereby the adverse effect of rolling of the vessel are diminished.

In an embodiment the blade support is removed from the wind turbine after the blades are mounted to the hub, whereby it can be reused for a next one or next batch of assemblies.

In an embodiment the hull of the crane vessel is afloat during the hoisting operation of the crane, whereby there is no need for a time consuming jack up operation.

In an embodiment the crane vessel comprises on the deck multiple assemblies for installing wind turbines, wherein the method comprises subsequently installing the assemblies on the destined wind turbine foundations.

In an embodiment thereof for each wind turbine the blades are mounted to the hub after the crane vessel has left the installed tower to install the subsequent assembly. The crane vessel is then only used to install the entire assemblies on the destined wind turbine foundations. The deployment and installation of the blades can be performed while the crane vessel is installing the next assembly.

An example not part of the invention provides a method for installing a wind turbine offshore onto a wind turbine foundation by means of a crane vessel, wherein the crane vessel comprises a hull with a deck, a crane on the deck, and on the deck an assembly for installing a wind turbine, wherein the assembly comprises a tower, a nacelle on top of the tower that is rotatable around the longitudinal axis of the tower, a blade support for supporting blades, and at least two blades that are supported by the blade support along the tower, wherein the nacelle comprises a housing and a rotatable hub outside the housing for mounting the blades to the nacelle, wherein the hub comprises at least two first blade mountings and wherein the blades comprise a blade section and at one end thereof a second blade mounting for cooperation with one of the first blade mountings of the hub, wherein the blade support comprises a first holder that is mounted to the tower, and a second holder that is mounted to the blade section of one of the blades and that keeps the engaged blade section spaced apart from the tower, wherein the method comprises shipping the crane vessel to an offshore wind turbine foundation, and by means of the crane lifting the assembly from the deck and installing the tower thereof on the wind turbine foundation, wherein the crane keeps the assembly with its tower upright above the wind turbine foundation and spaced apart from it, wherein pulling wires are tightened up between the wind turbine foundation and the bottom of the tower, wherein the pulling wires pull the tower towards the wind turbine foundation.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1 shows a crane vessel lifting a wind turbine assembly according to the invention onto an offshore wind turbine foundation;
Figures 2A-2F show the wind turbine assembly and details of the blade support thereof, the blade tip support and the shock absorption assembly;
Figures 2G and 2H show an alternative configuration at the shock absorption assembly;
Figure 3 shows the rigging assembly used for installing the wind turbine assembly;
Figure 4A-4D show the installation sequence of the wind turbine assembly onto the foundation; and
Figures 5A-5C show the installation of a blade to the hub.

### DETAILED DESCRIPTION OF THE INVENTION

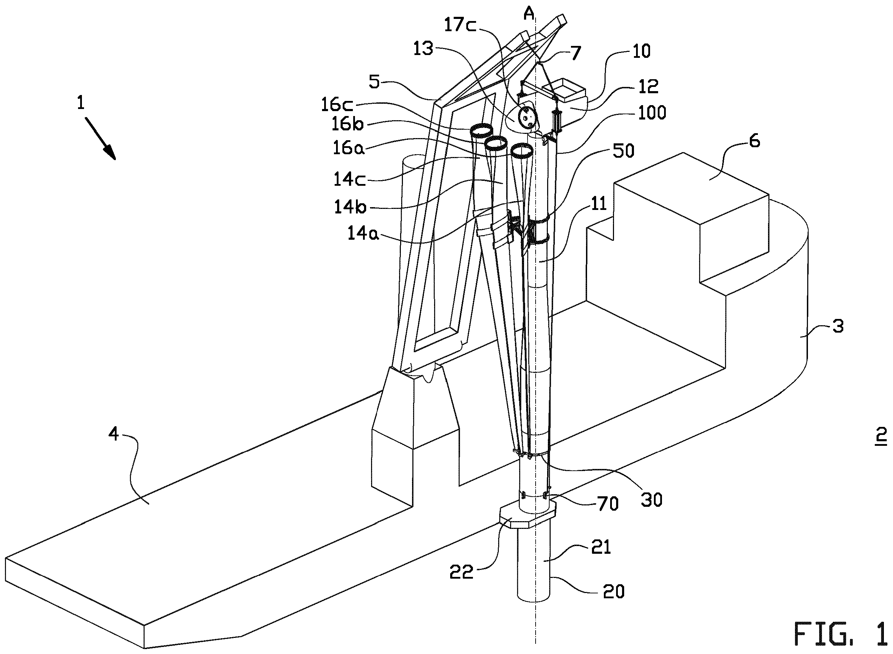

Figure 1 shows a crane vessel 1 lifting a wind turbine assembly 10 onto an offshore wind turbine foundation 20. The crane vessel 1 comprises a floating hull 3, a deck 4, a crane 5 and a main cabin or accommodation 6. The wind turbine foundation 20 comprises a tubular pedestal or transition piece 21 protruding from the water 2 and a foundation platform 22 attached thereto for access of personnel and equipment. The wind turbine assembly 10 comprises a tower 11 with a longitudinal axis A, a nacelle 12 that is rotatable in direction P around the longitudinal axis A of the tower 11, a hub 13 and three blades 14a-c. The blades 14a-c are attached along the tower 11 by means of a blade support 50 and a blade tip support 30. In this example only one wind turbine assembly 10 is shown for clarity, it should be clear that the crane vessel 1 may carry multiple wind turbine assemblies 10 on its deck 4 for subsequent installation thereof.

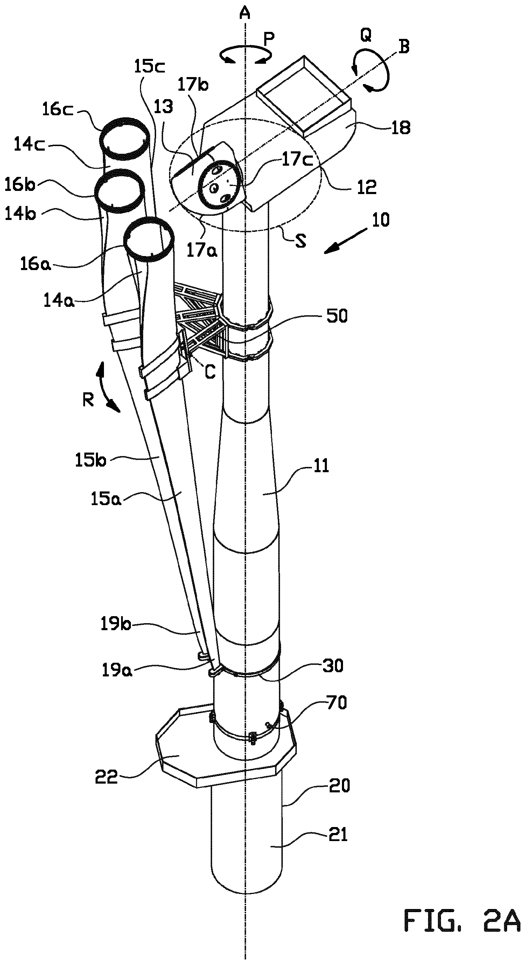

Figure 2A shows the wind turbine assembly 10 positioned on the wind turbine foundation 20. The tower 11 may consist of multiple pre-assembled sections. The nacelle 12 comprises a housing 18 with in this example a not shown generator inside. The hub 13 outside the housing 18 can rotate in direction Q around rotation axis B and has multiple first blade mountings 17a-c. When the nacelle 12 is rotated 360 degrees around axis A the distal end of the hub 13 circumscribes circle S. The blades 14a-c comprise a blade section 15a-c and at one end thereof a second blade mounting 16a-c. In this example the first blade mountings 17a-c comprise rings of holes to receive corresponding threaded studs on the second blade mountings 16a-c. The blades 14a-c are attached to the tower 11 by the blade support 50 with the blade tips 19a-c secured in the blade tip support 30.

The wind turbine assembly 10 is pre-assembled and tested onshore before it is loaded onto the crane vessel 1. The blades 14a-c, blade supports 50 and blade tip supports 30 are precisely positioned so as to make sure that the first blade mountings 17a-c are aligned with and within reach of the second blade mounting 16a-c when the blades 14a-c are in mounting position.

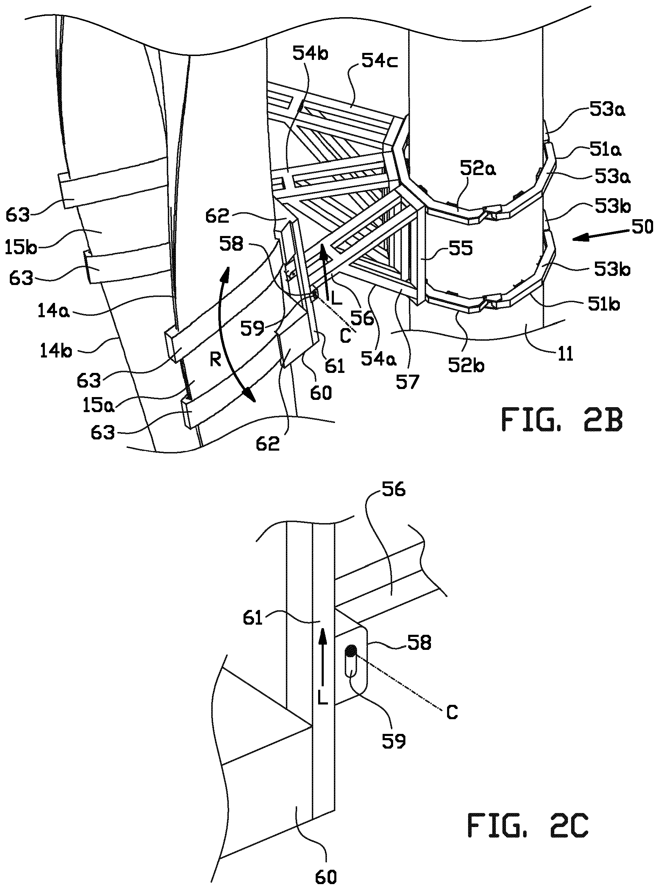

As is best shown in figure 2B the blade support 50 comprises an upper circular first collar 51a and a lower circular second collar 51b clamped around the tower 11. The collars 51a-b have a first collar section 52a-b covering approximately half of the circumference of the tower 11 and two second collar sections 53a-b covering approximately a quarter of the circumference of the tower 11. The second collar sections 53a-b have a hinged connection to the first collar section 52a-b at a first end and lock onto each other at the other end. The inner surface of the collars 51a-b is provided with padding to prevent damage to the tower 11. The collars 51a-b are both orientated horizontal and mounted spaced apart to three first holders 54a-c. The first holders 54a-c are disposed on the first collar sections 52a-b, in this example at about 20 degrees increments of the tower 11 circumference, whereby the blades 14a-c form a group that is disposed at the same side of the tower 11.

The first holders 54a-c all have substantially the same composition, one exemplary composition is explained hereafter. The first holder 54a has a base frame 55 oriented vertically and at its outer ends attached to and spacing apart the first collar 51a and second collar 51b. A top beam is 56 oriented horizontally and attached to the base frame 55 at the first collar 51a and extends perpendicular from the tower 11 to a second holder 60. A diagonal brace 57 supports the top beam 56.

The first holder 54a has at the outer end of the top beam 56 a hinge 58 with a hinge pin with a hinge axis C perpendicular to the longitudinal axis A of the tower 11 and, as best shown in figure 2C, a slot 59 which allows the blade 14a to slide with respect to the hinge pin over a limited distance in direction L parallel to the length of the blade 14a. A second holder 60 is connected to the opposite side of the hinge 58 and comprises a base frame 61 with the hinge 58 disposed somewhat below its center. Cradles 62 are fitted at each end of the base frame 61 and are arranged to receive and hold a blade section 15a. The cradles 62 are therefore shaped to match the local geometry of the blade section 15a at the holding position thereof. The cradles 62 are provided with a clamping strap 63 which wrap around the blade section 15a closely following its surface to clamp the blade section 15a into the cradles 62. The blade 14a can make a pure tilting motion in direction R around hinge axis C with respect to the tower 11. During the tilting operation the hinge axis C has fixed distances with respect to the first holder 54a and second holder 60 and to the axis A of the tower 11. In this example the location of the center of gravity of the blade 14a makes that the blade tip 19 will automatically tilt towards the tower 11 to a storage position in which the first blade mounting 17a and the second blade mounting 16a are spaced apart from each other. The blade 14a can tilt around hinge axis C to a mounting position in which the first blade mounting 17a is aligned with the second blade mounting 16a. In the storage position the location where the tips of the blades 14a-c meet the tower 11, the blade tip support 30 secures the blade 14a to the tower 11.

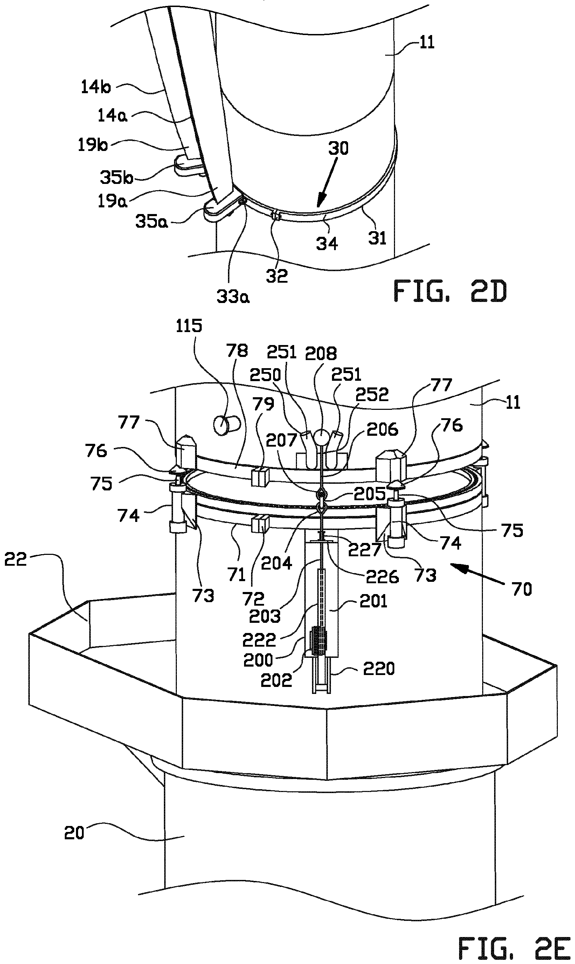

As is best shown in figure 2D the blade tip support 30 comprises a circular collar 31 clamped around the tower 11. The collar 31 has a strip 34 covering the circumference of the tower 11 provided with a connector 32 for installation to and removal from the tower 11 thereof. The inner surface of the collar 31 is provided with padding to prevent damage to the tower 11. At the location where the blade tips 19a-c meet the tower 11 the collar 31 is provided with third holders 33a-c. Fourth holders 35a-c are releasably mounted to the blade tips 19a-c and to the third holders 33a-c to keep the blade tips 19a-c at a fixed distance with respect to the tower 11.

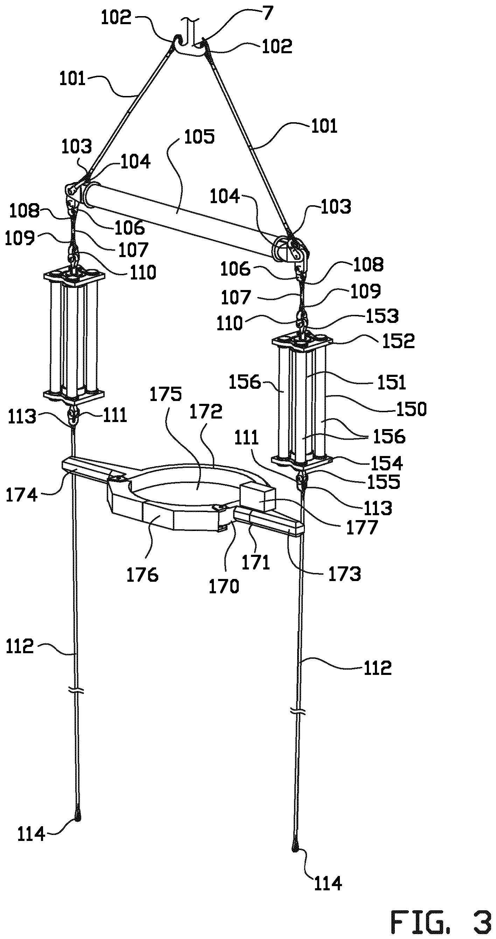

As best shown in figure 3 the wind turbine assembly 10 is attached to the crane 5 by means of a rigging assembly 100. The rigging assembly 100 comprises as from the crane hook 7 downwards two first lifting wires 101 having at a first end an end loop 102 attached to the crane hook 7 and at the other end an end loop 103 attached to a shackle 104. The shackles 104 are attached to the ends of a horizontal tubular spreader bar 105 which keeps the ends of the first lifting wires 101 and the second lifting wires 107 spaced apart. In this way the part of the rigging assembly 100 below the spreader bar 105 hangs free from the nacelle 12 and the tower 11.

At both ends of the spreader bar 105 the second lifting wire 107 is attached at a first end with an end loop 108 by means of a shackle 106. The second lifting wire 107 is at its second end with an end loop 109 attached to a first end of a shock absorber 150 by means of a shackle 110. At the second end of the shock absorber 150 a third lifting wire 112 is attached at a first end with an end loop 113 by means of a shackle 111. The second end with an end loop 114 of the third lifting wire 112 hangs freely downwards for connection to the trunnions 115 near the lower flange of the tower 11.

The rigging assembly 100 further comprises a tower clamping assembly 170 which is connected at both ends to the third lifting wires 112 close to the first ends thereof. The tower clamping system 170 is orientated in the horizontal plane and has substantially the same length as the spreader bar 105 and thus keeps the third lifting wires 112 spaced apart at a same distance as the spreader bar 105 keeps the first and second lifting wires 101, 107 spaced apart.

The tower clamping assembly 170 comprises a body 171 with, in the horizontal plane, an U-shaped part 172 and two tube shaped beams 173, 174 each projecting outwardly from one leg of the U-shaped part 172 to one of the third lifting wires 112. The U-shaped part 172 defines an opening 175 for receiving the tower 11 of the wind turbine assembly 10. The opening 175 can be closed by a clamping member 176 which has a hinged connection to the end of one leg of the U-shaped part 172 and can be locked to the other leg. The tower clamping assembly is provided with a remote control assembly 177 for opening, closing and locking of the clamping member 176.

The shock absorber 150 is an implementation of a known gas spring and comprises a hydraulic cylinder 151 having at the cylinder base a base plate 152 provided with a first lifting eye 153 which is attached to a shackle 110. A head plate 154 having a hole to accommodate the cylinder piston is provided at the cylinder head. The cylinder rod is provided at its end with a second lifting eye 155. Between the base and head plate 152, 154 four cylindrical accumulators 156 are arranged around the hydraulic cylinder 151. The accumulators 156 are, through a not shown nozzle, in connection with the hydraulic cylinder 151. When a predetermined force is exerted to the second lifting eye 155 the cylinder piston will move. The configuration of the hydraulic cylinder 151, accumulators 156 and nozzle provide tension and shock absorption during the installation works of the wind turbine assembly 10.

As best shown in figure 2E the wind turbine foundation 20 and the tower 11 are provided with a shock absorption assembly 70 which comprises a first strip 71 clamped around the pedestal 21 of the foundation 20. The strip 71 covers the circumference of the pedestal 21 and is provided with a connector 72 for installation to and removal from the pedestal 21. The inner surface of the strip 71 is provided with padding to prevent damage to the pedestal 11. At four location spaced equally apart about the circumference of the pedestal 21 the strip 71 is provided with damper brackets 73 holding a damper 74. The dampers 74 are in this example vertically orientated hydraulic cylinder dampers with the piston 75 extending above the horizontal upper plane of the pedestal 21.

The tower 11 is near its bottom flange provided with hollow cones 76 receiving the damper pistons 75. The locations of the cones 76 about the circumference of the tower 11 correspond to those of the dampers 74. The cones 76 are attached to the tower 11 by means of cone brackets 77 which are fitted to a second strip 78 having a connector 79 for installation to and removal from the tower 11. During installation of the wind turbine assembly 10 the hollow cones 76 will push down the damper pistons 75 whereby the impact of landing the tower 11 on the pedestal 21 will be reduced to a minimum.

The shock absorption assembly 70 is further provided with pulling devices 200 for the wind turbine assembly 10 at equally spaced interval on the circumference of the pedestal 21. A pulling device 200 comprises a base frame 201 that is fixed to the first strip 71. On the base frame 201 a winch 202 is provided having around the drum a steel pulling wire 203 having an end loop 204 at the free end. The winch 202 is provided with an electric or hydraulic drum drive with a controller to keep the pulling wire 203 under a bias when the controller is activated. At the opposite side a steel abutment plate 226 extends from the base frame 201, having a hole or a set of surrounding rollers for the pulling wire 203 to guide the pulling wire 203 vertically over the base frame 201. The pulling wire 203 passes through a bushing 227 that can loosely slide along the pulling wire 203.

The winch 202 can apply a pretension force on the pulling wire 203 whereby the end loop 204 abuts the bushing 227 to keep it in abutment with the abutment plate 226. In this position the bushing 227 projects vertically from the abutment plate 226. The end loops 204 of the pulling wire 203 is connected to the end loop 207 of a steel end wire 206 by means of a shackle 205. The diameter of the end wire 206 is larger than the diameter of the pulling wire 203. At the opposite side the end cable 206 is connected with a steel end ball or headache ball 208.

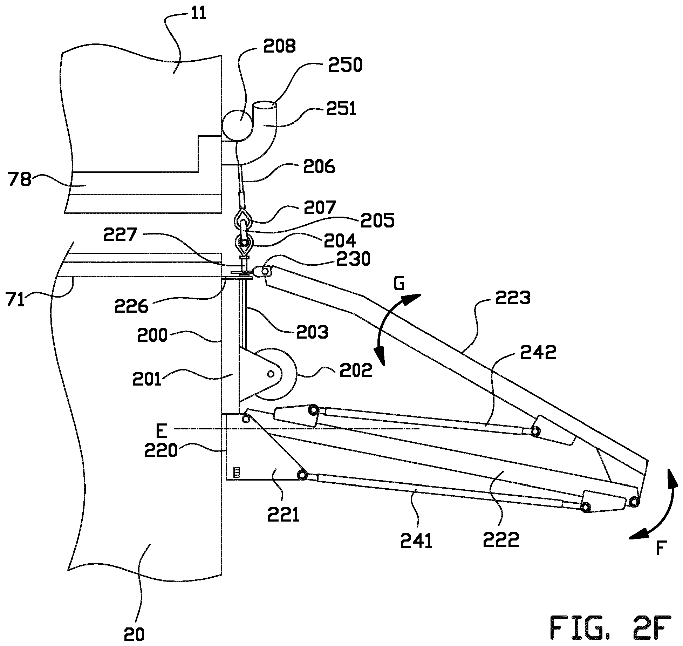

The pulling device 200 comprises a manipulator 220, shown schematically in side view only in figure 2F, having a crane body 221 that can rotate around a horizontal axis E by means of an hydraulic motor that is not shown. The crane body 221 carries a manipulator arm comprising a boom 222 and a jib 223. The boom 222 has a hinged connection to the crane body 221 and can swing in direction F around a horizontal axis by means of a first hydraulic cylinder 241. At the opposite side the jib 223 can swing with respect to the boom 222 in direction G by means of a second hydraulic cylinder 242. The hydraulics of the manipulator 220 is remotely controlled. The free end of the jib 223 carries a hook 230 with a slot suitable to catch the bushing 227, wherein the bushing 227 remains confined in its axial direction in the hook 230.

The second strip 78 on the tower 11 is provided at locations corresponding to the pulling devices 200 with catchers 250 comprising two tubes 251 that are curved upwards away from the water 2. The tubes 251 extend from the second strip 78 parallel to each other and curve upwards to an orientation with a small angle away from the tower 11. The tubes 251 define a slot 252 between them having as from the second strip 78 to the curve a straight section and a flaring section from the curve onwards to the free end of the tubes 251.

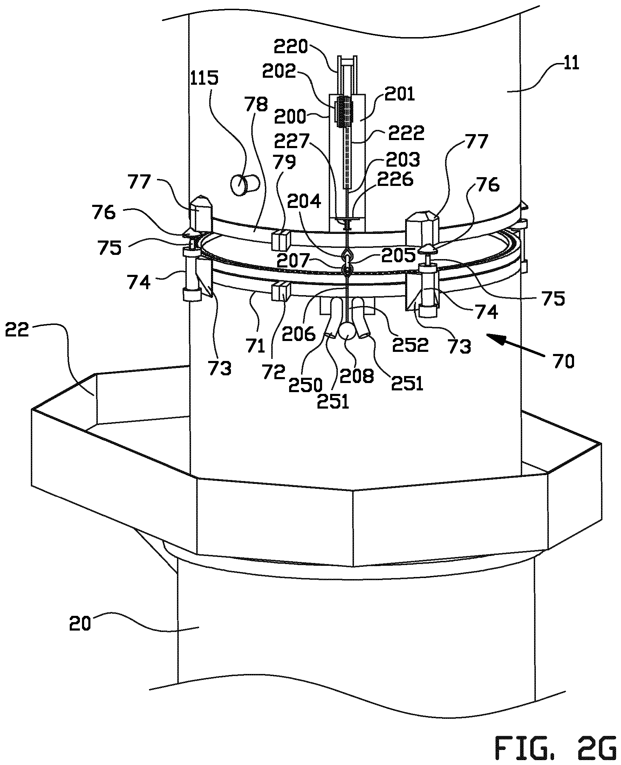

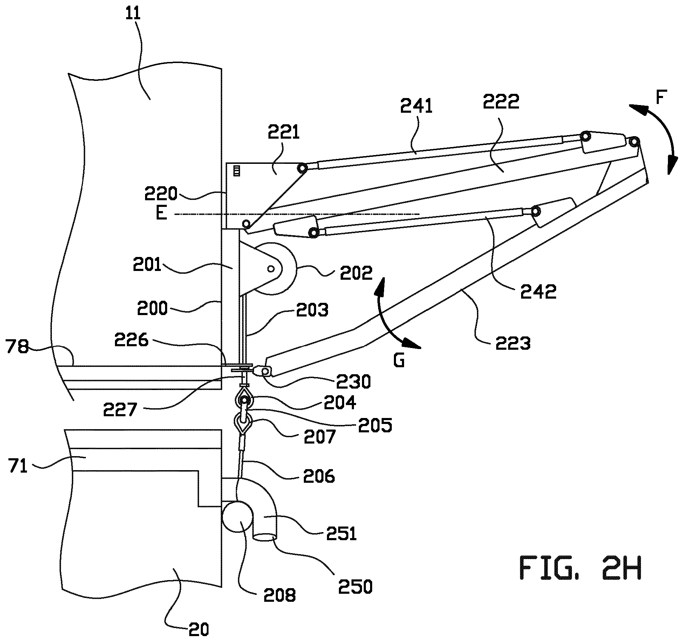

In an alternative embodiment shown in figures 2G and 2H, the pulling devices 200 are provided on the tower 11 and the catchers 250 are provided on the foundation 20. The pulling device 200 is with its base frame 201 fixed to the second strip 78 and the tubes 251 of the catcher 250 extend from the first strip 71. Furthermore the configuration of the pulling device 70 and the catcher 250 is the same as described above.

Installing the wind turbine assembly 10 is performed after maneuvering the crane vessel 1 with its crane 5 near the wind turbine foundation 20 using a positioning system. When the crane vessel 1 is in its final position the crane 5 will pick up the rigging assembly 100 and hoist it to a position close to the wind turbine assembly 10 with the spreader bar 105 higher and the tower clamping assembly 170 lower than the nacelle 12.

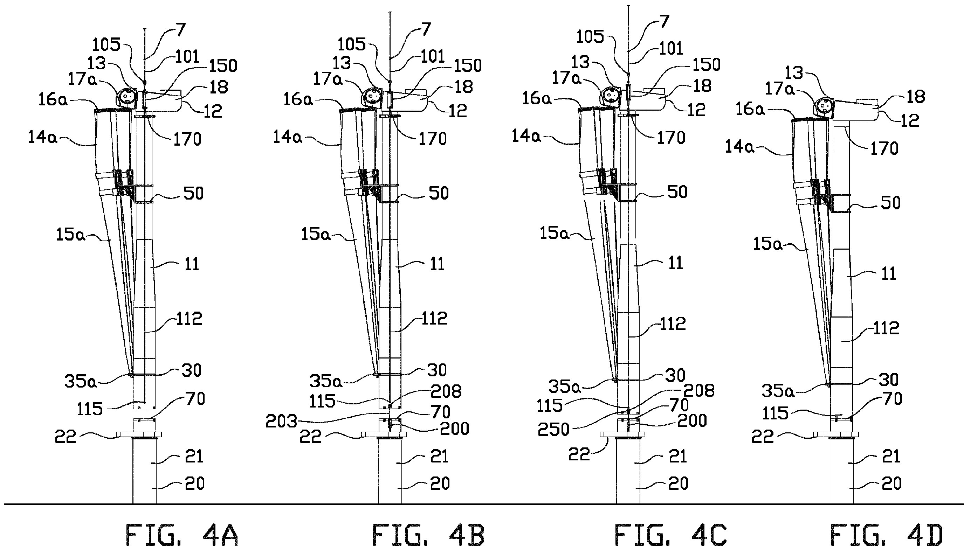

Prior to lifting the wind turbine assembly 10 the opening 175 of the clamping assembly 170 is facing the tower 11 and the clamping member 176 is in an open position. The crane 5 slowly moves the U-shaped part 172 around the tower 11 below the nacelle 12. Subsequently the clamping member 176 is remotely operated to a closed position whereby the tower 11 is secured in the clamping assembly 170. The lower ends 114 of the third lifting wires 112 are attached to the trunnions 115 near the bottom flange of the tower 11. Subsequently the crane 5 applies tension on the rigging assembly 100 to ensure stability of the wind turbine assembly 10 and the not shown sea fastening of the wind turbine assembly 10 at the deck 8 of the vessel 1 is released. The wind turbine assembly 10 is lifted free from the deck 8 and moved to a position directly above the pedestal 21 with the catchers 250 straight above the pulling devices 200 as shown in figure 4A.

Subsequently the manipulators 220 catch the bushings 227 in the hook 230. The boom 222 and the jib 223 reach out towards the corresponding catcher 250 on the tower 11, whereby the pulling wire 203 is paid out by the winch 202 under the pretension on the pulling wire 203. In this manner the pulling wire 203 is kept substantially straight between the abutment plate 226 and the engaged bushing 227. The end cable 206 with the end ball 208 depends freely downwards from the shackle 205, wherein the end cable 206 keeps the end ball 208 at a fixed distance from the hook 230. The end ball 208 is maneuvered into the catcher 250 and subsequently the boom 222 and jib 223 are retracted whereby the end ball 208 is confined and the end cable 208 is slid into the straight slot 252 section between the tubes 251. The boom 222 and jib 223 are brought back to the abutment plate 226, wherein the pulling wire 203 and the end cable 206 initially hang down loosely. At this stage the manipulators 220 have installed all pulling wires 202 between the tower 11 and the pedestal 21 as best shown in figure 4B.

As shown in figures 4B-D the pull down force on the pulling wires 203 is slowly increased by the winches 202 until the shock absorbers 150 of the lifting assembly 100 start paying out and, as a result, the tower 11 moves downwards. When the hollow cones 76 on the tower 11 are in close proximity of the corresponding damper pistons 75 on the pedestal 21, the winches 202 stop paying in the pulling wires 203. At this stage the bolt holes of the flanges of the pedestal 21 and tower 11 are aligned before final set-down of the tower 11. For the final set down the winches 202 pay in pulling wire 203 until the tower 11 is on its final position on the pedestal 21. During the final set down operation of the wind turbine assembly 10 the hollow cones 76 push down the damper pistons 75 whereby the impact of landing the tower 11 on the pedestal 21 is reduced to a minimum.

After final set down of the wind turbine assembly 10 a not shown quick clamping mechanism is applied to temporarily clamp the flanges of the tower 11 and pedestal 21 together while the permanent connection is made. When the quick clamping mechanism is applied the winches 202 reduce the force on the pulling wires 203 to a minimum and the crane 5 lowers the hook 7 until the shock absorbers 150 have fully retracted the second lifting 155 eye to its head plate 154 and the third lifting wires 112 are free of tension. Subsequently the end balls 208 are removed from the catchers 250 by the manipulators 220 and brought back to their initial position on the pulling device 200. The rigging assembly 100 is released from the wind turbine assembly 10 by removing the third lifting wires 112 from the trunnions 115, remotely opening the clamping member 176 and moving the crane 5 away from the wind turbine assembly.

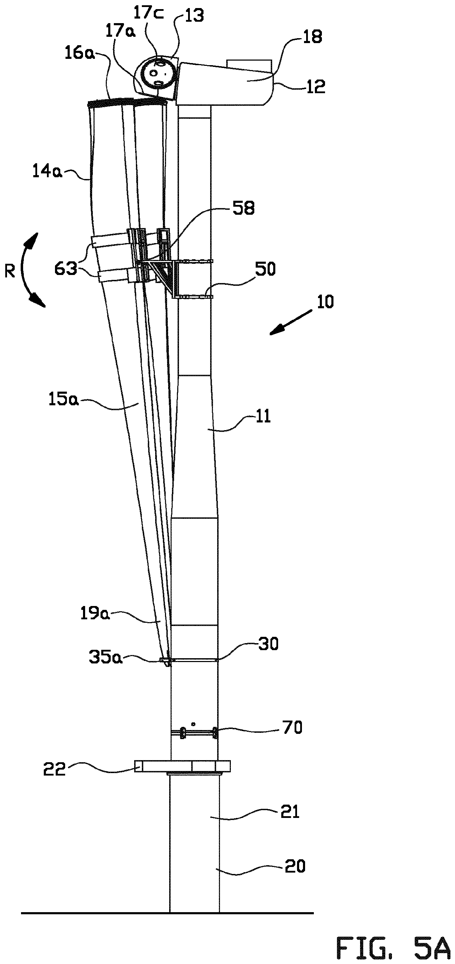

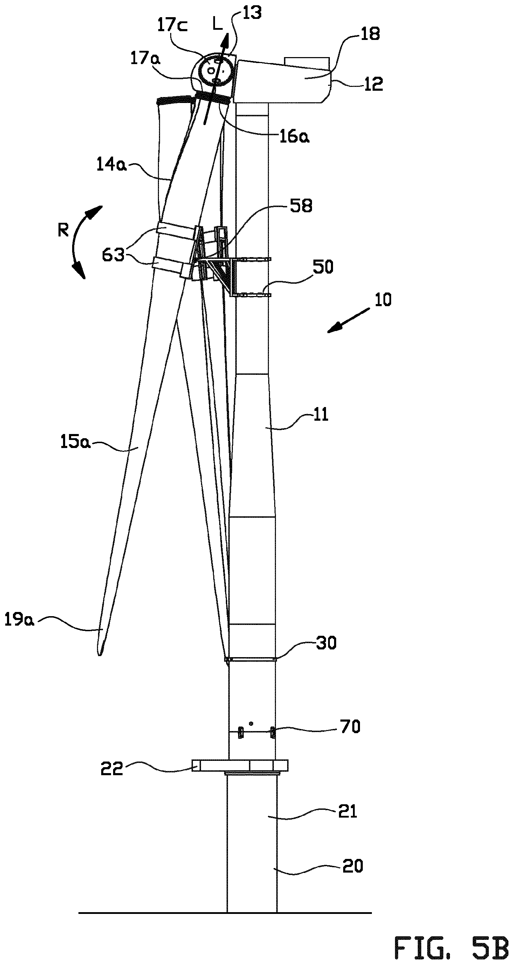

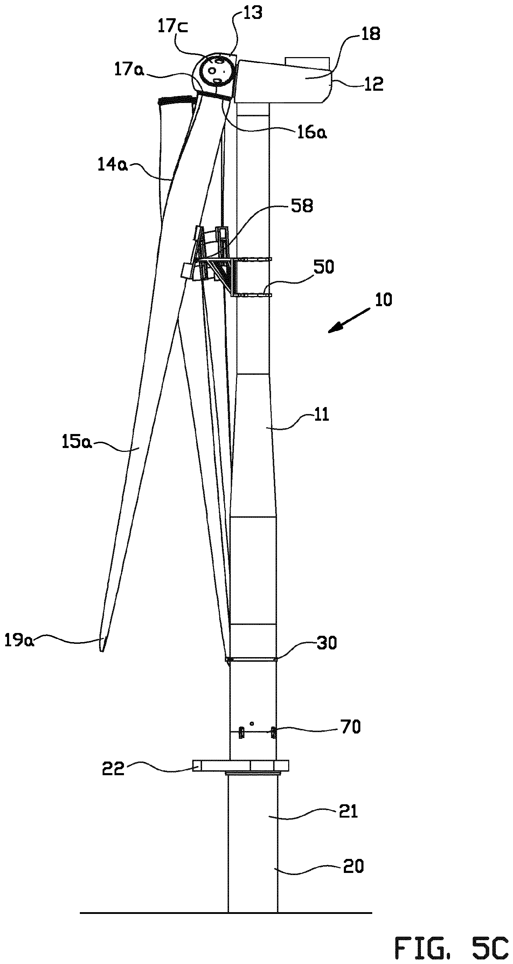

In figure 5A-C the wind turbine assembly 10 is shown installed on the foundation 20 with the blades 14a-c in their storage position. In order to install the first blade 14a to the hub 13, the blade tip 19a is released from the blade tip support 30 by removing the fourth holder 35a. Subsequently the blade 14a is tilted in direction R around the hinge axis C from its storage position to its mounting position whereby the second blade mounting 16a is aligned with the first blade mounting 17a. The threaded studs on the second blade mounting 16a are close to the corresponding holes of the first blade mounting 17a. The two blade mountings 16a, 17a are brought in abutment by pulling the blade 14a in direction L by a not shown pulling device such as a strand jack, wherein the second holder 60 with the blade 14a slides along the slot 59 of the hinge 58. The final connection is made by placing nuts on the threaded studs and tightening them. Lastly the clamping straps 62 are removed from the blade section 15a.

Subsequently the hub is rotated 120 degrees in direction Q about axis B moving the first blade 14a away from the second blade 14b. The nacelle 12 is rotated about its axis A to a position in which the hub 13 is in line with the second blade 14b. In this way the subsequent first blade mounting 17b is moved to the position to receive the corresponding second blade mounting 16b. The second blade 14b and third blade 14c are installed in the same manner as described above for the first blade 14a.

After final installation of all the blades 14a-c the blade support 50, the blade tip support 30 and the shock absorption assembly 70 are connected to a not shown winch in the nacelle 12. The winch lowers them to the foundation platform 22 from which they are removed by an not shown auxiliary vessel to transport them back to the onshore assembly yard of the wind turbine assemblies 10.

Pre-assembling wind turbine assemblies 10 onshore is safer, faster and cheaper compared to offshore assembly thereof since the work is performed in a controlled environment. Pre-assembling the blades 14a-c on the hub 13 onshore is not an option due to the large size of current wind turbines. The wind turbine assembly 10 is pre-assembled onshore before it is loaded onto the crane vessel 1. The blades 14a-c, blade supports 50 and blade tip supports 30 are precisely positioned so as to make sure that the first blade mountings 17a-c perfectly align with and are within reach of the second blade mounting 16a-c when the blades 14a-c are in mounting position.

By using the blade support 50 according to the invention blades 14a-c are attached to the tower 11 to be installed as part of the wind turbine assembly 10. The blade support 50 provides simple means to install the blades 14a-c to the hub 13 offshore without the use of the crane 5. By only tilting the blade around hinge axis C in direction R the first blade mountings 17a-c are aligned with and within reach of the second blade mounting 16a-c.

It is to be understood that the above description is included to illustrate the operation of the preferred embodiments and is not meant to limit the scope of the invention. The invention is defined by the appended claims.

## Claims

1. Assembly (10) for installing a wind turbine onto a wind turbine foundation (20), comprising a tower (11), a nacelle (12) on top of the tower that is rotatable around the longitudinal axis (A) of the tower, a blade support (50) for supporting blades, and at least two blades (14a-c) that are supported by the blade support along the tower, wherein the nacelle comprises a housing (18) and a rotatable hub (13) outside the housing for mounting the blades to the nacelle, wherein the hub comprises at least two first blade mountings (17a-c) and wherein the blades comprise a blade section (15a-c) and at one end thereof a second blade mounting (16a-c) for cooperation with one of the first blade mountings of the hub, wherein the blade support comprises a first holder (54a-c) that is mounted to the tower, a second holder (60) that is mounted to the blade section of one of the blades and that keeps the engaged blade section spaced apart from the tower, and a hinge (58) between the first holder and the second holder having its hinge axis (C) perpendicular to the longitudinal axis of the tower, wherein the hinge axis has a fixed distance with respect to both the first holder (54a-c) and the second holder (60) when hinging, wherein the blade is tiltable (R) with respect to the tower by means of the blade support in a pure tilting movement around the hinge axis (C) between a storage position in which the first blade mounting (17a-c) and the second blade mounting (16a-c) are spaced apart from each other, and a mounting position in which the first blade mounting is aligned with the second blade mounting to be mounted to each other.

2. Assembly (10) according to claim 1, wherein in a projection parallel to the longitudinal axis (A) of the tower (11), the second blade mounting (16a-c) extends in the storage position outside the circumscribed circle (S) of the hub (13) of the rotatable nacelle (12).

3. Assembly (10) according to any one of the preceding claims, wherein the second holder (60) of the blade support (50) engages the blade section (15a-c) near or at the longitudinal center of gravity of the blade (14a-c) .

4. Assembly (10) according to any one of the preceding claims, wherein the assembly comprises a blade tip support (30) that secures the blade (14a-c) in the storage position at its tip (19a-c) secured to the tower (11) .

5. Assembly (10) according to any one of the preceding claims, wherein the assembly comprises a blade tip support (30) for the blade (14a-c) that is supported by the blade support (50), wherein the blade tip support (30) comprises a third holder (33a-c) that is mounted to the tower (11), and a fourth holder (35a-c) that is releasably mounted to the tip (19a-c) of the blade section (15a-c) of the blade and that keeps the tip at a fixed distance with respect to the tower in the storage position of the blade.

6. Assembly (10) according to any one of the preceding claims, wherein the blade support (50) comprises a slide bearing (59) between the first holder (54a-c) and the second holder (60) for translation of the second holder with respect to the first holder parallel to the longitudinal direction of the supported blade over a limited stroke (L), wherein the limited stroke allows translation of the blade (14a-c) in its mounting position between a first position in which the first blade mounting (17a-c) is aligned with the second blade mounting (16a-c), and a second position in which the first blade mounting (17a-c) is in abutment with the second blade mounting (16a-c), wherein the slide bearing (59) preferably carries the second holder (60) at the begin of the limited stroke (L).

7. Assembly (10) according to any one of the preceding claims, wherein the blade support (50) comprises for each blade (14a-c) a first holder (54a-c) and a hinge (58) between the first holder (54a-c) and the second holder (60) having its hinge axis (C) perpendicular to the longitudinal axis (A) of the tower (11), wherein each hinge axis (C) has a fixed distance with respect to both the first holder (54a-c) and the second holder (60) when hinging, wherein the blades (14a-c) preferably form a group of blades with its center of mass at one side of a notional vertical plane through which the longitudinal axis (A) of the tower extends, wherein the center of mass of the group of blades (14a-c) preferably extends with respect to the notional vertical plane at the opposite side of the center of mass of the nacelle (12).

8. Method for installing a wind turbine offshore onto a wind turbine foundation (20) by means of a crane vessel (1), wherein the crane vessel comprises a hull (3) with a deck (4), a crane (5) on the deck, and on the deck an assembly (10) for installing a wind turbine, wherein the assembly comprises a tower (11), a nacelle (12) on top of the tower that is rotatable around the longitudinal axis (A) of the tower, a blade support (50) for supporting blades, and at least two blades (14a-c) that are supported by the blade support along the tower, wherein the nacelle comprises a housing (18) and a rotatable hub (13) outside the housing for mounting the blades to the nacelle, wherein the hub comprises at least two first blade mountings (17a-c) and wherein the blades comprise a blade section (15a-c) and at one end thereof a second blade mounting (16a-c) for cooperation with one of the first blade mountings of the hub, wherein the blade support comprises a first holder (54a-c) that is mounted to the tower, a second holder (60) that is mounted to the blade section of one of the blades and that keeps the engaged blade section spaced apart from the tower, and a hinge (58) between the first holder and the second holder having its hinge axis (C) perpendicular to the longitudinal axis of the tower, wherein the hinge axis has a fixed distance with respect to both the first holder (54a-c) and the second holder (60) when hinging, wherein the blade is tiltable (R) with respect to the tower by means of the blade support in a pure tilting movement around the hinge axis (C) between a storage position in which the first blade mounting (17a-c) and the second blade mounting (16a-c) are spaced apart from each other, and a mounting position in which the first blade mounting is aligned with the second blade mounting to be mounted to each other, wherein the method comprises shipping the crane vessel (1) to an offshore wind turbine foundation (20), by means of the crane (5) lifting the assembly (10) from the deck and installing the tower (11) thereof on the wind turbine foundation, and tilting (R) the blade from its storage position to its mounting position according to the pure tilting movement whereby the first blade mounting (17a-c) and the second blade mounting (16a-c) become aligned, and mounting the first blade mounting and second mounting to each other.

9. Method according to claim 8, wherein in a projection parallel to the longitudinal axis (A) of the tower (11), the second blade mounting (16a-c) extends in the storage position outside the circumscribed circle (S) of the hub (13) on the rotatable nacelle (12), wherein the method comprises mounting one of the blades (14a-c) to the hub (13) and subsequently rotating the nacelle (12) with the mounted blade to align it with the blade (14a-c) in the blade support (50) while this blade is in its storage position.

10. Method according to claim 8 or 9, wherein the assembly comprises a blade tip support (30) that secures the blade (14a-c) in the storage position at its tip (19a-c) secured to the tower (11).

11. Method according to any one of the claims 8-10, wherein the blade support (50) comprises for each blade (14a-c) a first holder (54a-c) and a hinge (58) between the first holder (54a-c) and the second holder (60) having its hinge axis (C) perpendicular to the longitudinal axis (A) of the tower (11), wherein each hinge axis (C) has a fixed distance with respect to both the first holder (54a-c) and the second holder (60) when hinging, wherein the method comprises for each blade (14a-c) tilting the blade from its storage position to its mounting position and mounting the blade to the hub (13) .

12. Method according to any one of the claims 8-11, wherein the crane (5) keeps the assembly (10) with its tower (11) upright above the wind turbine foundation (20) and spaced apart from it, wherein pulling wires (203) are tightened up between the wind turbine foundation and the bottom of the tower, wherein the pulling wires pull the tower towards the wind turbine foundation.

13. Method according to any one of the claims 8-12, wherein the blade support (50) is removed from the wind turbine after the blades (14a-c) are mounted to the hub (13) .

14. Method according to any one of the claims 8-13, wherein the hull (3) of the crane vessel (1) is afloat during the hoisting operation of the crane (5).

15. Method according to any one of the claims 8-14, wherein the crane vessel (1) comprises on the deck (4) multiple assemblies (10) for installing wind turbines, wherein the method comprises subsequently installing the assemblies (10) on the destined wind turbine foundations (20), wherein, preferably, for each wind turbine the blades (14a-c) are mounted to the hub (13) after the crane vessel (1) has left the installed tower (11) to install the subsequent assembly (10).

## Patentansprüche

1. Anordnung (10) zum Installieren einer Windturbine auf eine Windturbinenbasis (20), wobei dieselbe Folgendes aufweist: einen Turm (11), ein Maschinenhaus (12) auf dem Turm, welches um die Längsachse (A) des Turms drehbar ist, eine Blattstütze (50) zum Stützen von Blättern, und zumindest zwei Blätter (14a-c), die von der Blattstütze entlang des Turms gestützt werden, wobei das Maschinenhaus ein Gehäuse (18) und eine drehbare Nabe (13) außerhalb des Gehäuses zum Befestigen der Blätter an dem Maschinenhaus aufweist, wobei das Maschinenhaus zumindest zwei erste Blattbefestigungen (17a-c) aufweist, und wobei die Blätter einen Blattabschnitt (15a-c) und an einem Ende davon eine zweite Blattbefestigung (16a-c) zum Zusammenwirken mit einer der ersten Blattbefestigungen der Nabe aufweist, wobei die Blattstütze einen ersten Halter (54a-c), der an dem Turm befestigt ist, einen zweiten Halter (60), der an dem Blattabschnitt eines der Blätter befestigt ist und der den in Eingriff genommenen Blattabschnitt beabstandet von dem Turm hält, und ein Gelenk (58) zwischen dem ersten Halter und dem zweiten Halter aufweist, wobei dessen Gelenkachse (C) senkrecht zu der Längsachse des Turms verläuft, wobei die Gelenkachse bei gelenkartiger Bewegung einen festen Abstand zu dem ersten Halter (54a-c) und dem zweiten Halter (60) aufweist, wobei das Blatt in Bezug auf den Turm mittels der Blattstütze in einer reinen Neigungsbewegung um die Gelenkachse (C) neigbar (R) ist zwischen einer Lagerungsstellung, in der die erste Blattbefestigung (17a-c) und die zweite Blattbefestigung (16a-c) voneinander beabstandet sind, und einer Befestigungsstellung, in der die erste Blattbefestigung mit der zweiten Blattbefestigung dahingehend ausgerichtet ist, miteinander befestigt zu werden.

2. Anordnung (10) gemäß Anspruch 1, bei der sich in einer Projektion parallel zu der Längsachse (A) des Turms (11) die zweite Blattbefestigung (16a-c) in der Lagerungsstellung außerhalb des begrenzten Kreises (S) der Nabe (13) und des drehbaren Maschinenhauses (12) erstreckt.

3. Anordnung (10) gemäß einem der vorhergehenden Ansprüche, bei der der zweite Halter (60) der Blattstütze (50) den Blattabschnitt (15a-c) in der Nähe von oder an dem Längsschwerpunkt des Blattes (14a-c) in Eingriff nimmt.

4. Anordnung (10) gemäß einem der vorhergehenden Ansprüche, wobei die Anordnung eine Blattspitzenstütze (30) aufweist, die das Blatt (14a-c) in der Lagerungsstellung an seiner Spitze (19a-c) auf an dem Turm (11) gesicherte Weise sichert.

5. Anordnung (10) gemäß einem der vorhergehenden Ansprüche, wobei die Anordnung eine Blattspitzenstütze (30) für das Blatt (14a-c) aufweist, die durch die Blattstütze (50) gestützt wird, wobei die Blattspitzenstütze (30) einen dritten Halter (33a-c), der an dem Turm (11) befestigt ist, und einen vierten Halter (35a-c) aufweist, der auf lösbare Weise an der Spitze (19a-c) des Blattabschnitts (15a-c) des Blatts befestigt ist und der die Spitze in der Lagerungsstellung des Blatts in einem festen Abstand zu dem Turm hält.

6. Anordnung (10) gemäß einem der vorhergehenden Ansprüche, wobei die Blattstütze (50) ein Gleitlager (59) zwischen dem ersten Halter (54a-c) und dem zweiten Halter (60) zur Verschiebung des zweiten Halters in Bezug auf den ersten Halter parallel zu der Längsrichtung des gestützten Blatts über einen begrenzten Hub (L) aufweist, wobei der begrenzte Hub eine Verschiebung des Blatts (14a-c) in seiner Befestigungsstellung zwischen einer ersten Stellung, in der die erste Blattbefestigung (17a-c) mit der zweiten Blattbefestigung (16a-c) ausgerichtet ist, und einer zweiten Stellung ermöglicht, in der die erste Blattbefestigung (17a-c) gegen die zweite Blattbefestigung (16a-c) anstößt, wobei das Gleitlager (59) vorzugsweise den zweiten Halter (60) zu Beginn des begrenzten Hubs (L) trägt.

7. Anordnung (10) gemäß einem der vorhergehenden Ansprüche, wobei die Blattstütze (50) für jedes Blatt (14a-c) einen ersten Halter (54a-c) und ein Gelenk (58) zwischen dem ersten Halter (54a-c) und dem zweiten Halter (60) aufweist, wobei dessen Gelenkachse (C) senkrecht zu der Längsachse (A) des Turms (11) verläuft, wobei jede Gelenkachse (C) bei gelenkartiger Bewegung einen festen Abstand zu dem ersten Halter (54a-c) und dem zweiten Halter (60) aufweist, wobei die Blätter (14a-c) vorzugsweise eine Gruppe von Blättern bilden, wobei deren Massenschwerpunkt auf einer Seite einer fiktiven vertikalen Ebene liegt, durch die sich die Längsachse (A) des Turms erstreckt, wobei sich der Massenschwerpunkt der Gruppe von Blättern (14a-c) vorzugsweise in Bezug auf die fiktive vertikale Ebene auf der gegenüberliegenden Seite des Massenschwerpunkts des Maschinenhauses (12) erstreckt.

8. Verfahren zum küstenfernen Installieren einer Windturbine auf einer Windturbinenbasis (20) mittels eines Kranschiffes (1), wobei das Kranschiff einen Schiffskörper (3) mit einem Deck (4), einem Kran (5) auf dem Deck, und auf dem Deck eine Anordnung (10) zum Installieren einer Windturbine aufweist, wobei die Anordnung (10) zum Installieren einer Windturbine auf eine Windturbinenbasis (20), wobei dieselbe Folgendes aufweist: einen Turm (11), ein Maschinenhaus (12) auf dem Turm, welches um die Längsachse (A) des Turms drehbar ist, eine Blattstütze (50) zum Stützen von Blättern, und zumindest zwei Blätter (14a-c), die von der Blattstütze entlang des Turms gestützt werden, wobei das Maschinenhaus ein Gehäuse (18) und eine drehbare Nabe (13) außerhalb des Gehäuses zum Befestigen der Blätter an dem Maschinenhaus aufweist, wobei das Maschinenhaus zumindest zwei erste Blattbefestigungen (17a-c) aufweist, und wobei die Blätter einen Blattabschnitt (15a-c) und an einem Ende davon eine zweite Blattbefestigung (16a-c) zum Zusammenwirken mit einer der ersten Blattbefestigungen der Nabe aufweist, wobei die Blattstütze einen ersten Halter (54a-c), der an dem Turm befestigt ist, einen zweiten Halter (60), der an dem Blattabschnitt eines der Blätter befestigt ist und der den in Eingriff genommenen Blattabschnitt beabstandet von dem Turm hält, und ein Gelenk (58) zwischen dem ersten Halter und dem zweiten Halter aufweist, wobei dessen Gelenkachse (C) senkrecht zu der Längsachse des Turms verläuft, wobei die Gelenkachse bei gelenkartiger Bewegung einen festen Abstand zu dem ersten Halter (54a-c) und dem zweiten Halter (60) aufweist, wobei das Blatt in Bezug auf den Turm mittels der Blattstütze in einer reinen Neigungsbewegung um die Gelenkachse (C) neigbar (R) ist zwischen einer Lagerungsstellung, in der die erste Blattbefestigung (17a-c) und die zweite Blattbefestigung (16a-c) voneinander beabstandet sind, und einer Befestigungsstellung, in der die erste Blattbefestigung mit der zweiten Blattbefestigung dahingehend ausgerichtet ist, miteinander befestigt zu werden, wobei das Verfahren folgende Schritte aufweist: Verschiffen des Kranschiffs (1) zu einer küstenfernen Windturbinenbasis (20), mittels des Kran (5), Anheben der Anordnung (10) von dem Deck und Installieren des Turms (11) derselben auf der Windturbinenbasis, und Neigen (R) des Blatts von seiner Lagerungsstellung zu seiner Befestigungsstellung gemäß der reinen Neigungsbewegung, wobei die erste Blattbefestigung (17a-c) und die zweite Blattbefestigung (16a-c) ausgerichtet werden, und Befestigen der ersten Blattbefestigung und der zweiten Blattbefestigung aneinander.

9. Verfahren gemäß Anspruch 8, wobei sich in einer Projektion parallel zu der Längsachse (A) des Turms (11) die zweite Blattbefestigung (16a-c) in der Lagerungsposition außerhalb des begrenzten Kreises (S) der Nabe (13) auf dem drehbaren Maschinenhaus (12) erstreckt, wobei das Verfahren Folgendes aufweist: Befestigen eines der Blätter (14a-c) an der Nabe (13) und daraufhin Drehen des Maschinenhauses (12) mit dem befestigten Blatt, um es mit dem Blatt (14a-c) in der Blattstütze (50) auszurichten, während dieses Blatt in seiner Lagerungsstellung ist.

10. Verfahren gemäß Anspruch 8 oder 9, wobei die Anordnung eine Blattspitzenstütze (30) aufweist, die das Blatt (14a-c) in der Lagerungsstellung an seiner Spitze (19a-c) auf an dem Turm (11) gesicherte Weise sichert.

11. Verfahren gemäß einem der Ansprüche 8 bis 10, wobei die Blattstütze (50) für jedes Blatt (14a-c) einen ersten Halter (54a-c) und ein Gelenk (58) zwischen dem ersten Halter (54a-c) und dem zweiten Halter (60) aufweist, wobei dessen Gelenkachse (C) senkrecht zu der Längsachse (A) des Turms (11) verläuft, wobei jede Gelenkachse (C) bei gelenkartiger Bewegung einen festen Abstand zu dem ersten Halter (54a-c) und dem zweiten Halter (60) aufweist, wobei das Verfahren für jedes Blatt (14a-c) ein Neigen des Blatts von seiner Lagerungsstellung zu seiner Befestigungsstellung und ein Befestigen des Blatts an der Nabe (13) aufweist.

12. Verfahren gemäß einem der Ansprüche 8 bis 11, wobei der Kran (5) die Anordnung (10) mit ihrem Turm (11) aufrecht über der Windturbinenbasis (20) und beabstandet von derselben hält, wobei Ziehdrähte (203) zwischen der Windturbinenbasis und dem Boden des Turms angezogen werden, wobei die Ziehdrähte den Turm zu der Windturbinenbasis ziehen.

13. Verfahren gemäß einem der Ansprüche 8 bis 12, wobei die Blattspitze (50) von der Windturbine entfernt wird, nachdem die Blätter (14a-c) an der Nabe (13) befestigt sind.

14. Verfahren gemäß einem der Ansprüche 8 bis 13, wobei der Schiffskörper (3) des Kranschiffs (11) während des Anhebevorgangs des Krans (5) schwimmt.

15. Verfahren gemäß einem der Ansprüche 8 bis 14, wobei das Kranschiff (1) auf dem Deck (4) mehrere Anordnungen (10) zum Installieren von Windturbinen aufweist, wobei das Verfahren Folgendes aufweist: aufeinanderfolgendes Installieren der Anordnungen (10) auf den gewünschten Windturbinenbasen (20), wobei für jede Windturbine vorzugsweise die Blätter (14a-c) an der Nabe (13) befestigt werden, nachdem das Kranschiff (1) den installierten Turm (11) verlassen hat, um die darauffolgende Anordnung (10) zu installieren.

## Revendications

1. Ensemble (10) pour installer une éolienne sur une fondation d'éolienne (20), comprenant une tour (11), une nacelle (12) au sommet de la tour qui est capable de tourner autour de l'axe longitudinal (A) de la tour, un support de pale (50) pour supporter des pales, et au moins deux pales (14a-c) qui sont supportées par le support de pale le long de la tour, dans lequel la nacelle comprend un boîtier (18) et un moyeu (13) rotatif à l'extérieur du boîtier pour monter les pales sur la nacelle, dans lequel le moyeu comprend au moins deux premiers montages de pale (17a-c) et dans lequel les pales comprennent une section de pale (15a-c) et à une extrémité de celle-ci un deuxième montage de pale (16a-c) pour une coopération avec l'un des premiers montages de pale du moyeu, dans lequel le support de pale comprend un premier dispositif de maintien (54a-c) qui est monté sur la tour, un deuxième dispositif de maintien (60) qui est monté sur la section de pale de l'une des pales et qui garde la section de pale engagée espacée de la tour, et une charnière (58) entre le premier dispositif de maintien et le deuxième dispositif de maintien ayant son axe de charnière (C) perpendiculaire à l'axe longitudinal de la tour, dans lequel l'axe de charnière a une distance fixe vis-à-vis à la fois du premier dispositif de maintien (54a-c) et du deuxième dispositif de maintien (60) lors d'une fixation par charnière, dans lequel la pale est inclinable (R) vis-à-vis de la tour au moyen du support de pale dans un mouvement d'inclinaison pur autour de l'axe de charnière (C) entre une position de stockage dans laquelle le premier montage de pale (17a-c) et le deuxième montage de pale (16a-c) sont espacés l'un de l'autre, et une position de montage dans laquelle le premier montage de pale est aligné avec le deuxième montage de pale pour être montés l'un sur l'autre.

2. Ensemble (10) selon la revendication 1, dans lequel dans une projection parallèle à l'axe longitudinal (A) de la tour (11), le deuxième montage de pale (16a-c) s'étend dans la position de stockage à l'extérieur du cercle circonscrit (S) du moyeu (13) de la nacelle (12) rotative.

3. Ensemble (10) selon l'une quelconque des revendications précédentes, dans lequel le deuxième dispositif de maintien (60) du support de pale (50) engage la section de pale (15a-c) à proximité ou au niveau du centre de gravité longitudinal de la pale (14a-c).

4. Ensemble (10) selon l'une quelconque des revendications précédentes, dans lequel l'ensemble comprend un support de bout de pale (30) qui fixe la pale (14a-c) dans la position de stockage au niveau de son bout (19a-c) fixé à la tour (11).

5. Ensemble (10) selon l'une quelconque des revendications précédentes, dans lequel l'ensemble comprend un support de bout de pale (30) pour la pale (14a-c) qui est supportée par le support de pale (50), dans lequel le support de bout de pale (30) comprend un troisième dispositif de maintien (33a-c) qui est monté sur la tour (11), et un quatrième dispositif de maintien (35a-c) qui est monté de manière libérable sur le bout (19a-c) de la section de pale (15a-c) de la pale et qui garde le bout à une distance fixe vis-à-vis de la tour dans la position de stockage de la pale.

6. Ensemble (10) selon l'une quelconque des revendications précédentes, dans lequel le support de pale (50) comprend un palier lisse (59) entre le premier dispositif de maintien (54a-c) et le deuxième dispositif de maintien (60) pour une translation du deuxième dispositif de maintien vis-à-vis du premier dispositif de maintien parallèlement à la direction longitudinale de la pale supportée sur une course limitée (L), dans lequel la course limitée permet une translation de la pale (14a-c) dans sa position de montage entre une première position dans laquelle le premier montage de pale (17a-c) est aligné avec le deuxième montage de pale (16a-c), et une deuxième position dans laquelle le premier montage de pale (17a-c) est en butée avec le deuxième montage de pale (16a-c), dans lequel le palier lisse (59) porte de préférence le deuxième dispositif de maintien (60) au début de la course limitée (L).

7. Ensemble (10) selon l'une quelconque des revendications précédentes, dans lequel le support de pale (50) comprend pour chaque pale (14a-c) un premier dispositif de maintien (54a-c) et une charnière (58) entre le premier dispositif de maintien (54a-c) et le deuxième dispositif de maintien (60) ayant son axe de charnière (C) perpendiculaire à l'axe longitudinal (A) de la tour (11), dans lequel chaque axe de charnière (C) a une distance fixe vis-à-vis à la fois du premier dispositif de maintien (54a-c) et du deuxième dispositif de maintien (60) lors d'une fixation par charnière, dans lequel les pales (14a-c) forment de préférence un groupe de pales avec son centre de masse au niveau d'un côté d'un plan vertical notionnel à travers lequel s'étend l'axe longitudinal (A) de la tour, dans lequel le centre de masse du groupe de pales (14a-c) s'étend de préférence vis-à-vis du plan vertical notionnel au niveau du côté opposé du centre de masse de la nacelle (12).

8. Procédé pour installer une éolienne en mer sur une fondation d'éolienne (20) au moyen d'une grue flottante (1), dans lequel la grue flottante comprend une coque (3) avec un pont (4), une grue (5) sur le pont, et sur le pont un ensemble (10) pour installer une éolienne, dans lequel l'ensemble comprend une tour (11), une nacelle (12) au sommet de la tour qui est capable de tourner autour de l'axe longitudinal (A) de la tour, un support de pale (50) pour supporter des pales, et au moins deux pales (14a-c) qui sont supportées par le support de pale le long de la tour, dans lequel la nacelle comprend un boîtier (18) et un moyeu (13) rotatif à l'extérieur du boîtier pour monter les pales sur la nacelle, dans lequel le moyeu comprend au moins deux premiers montages de pale (17a-c) et dans lequel les pales comprennent une section de pale (15a-c) et à une extrémité de celle-ci un deuxième montage de pale (16a-c) pour une coopération avec l'un des premiers montages de pale du moyeu, dans lequel le support de pale comprend un premier dispositif de maintien (54a-c) qui est monté sur la tour, un deuxième dispositif de maintien (60) qui est monté sur la section de pale de l'une des pales et qui garde la section de pale engagée espacée de la tour, et une charnière (58) entre le premier dispositif de maintien et le deuxième dispositif de maintien ayant son axe de charnière (C) perpendiculaire à l'axe longitudinal de la tour, dans lequel l'axe de charnière a une distance fixe vis-à-vis à la fois du premier dispositif de maintien (54a-c) et du deuxième dispositif de maintien (60) lors d'une fixation par charnière, dans lequel la pale est inclinable (R) vis-à-vis de la tour au moyen du support de pale dans un mouvement d'inclinaison pur autour de l'axe de charnière (C) entre une position de stockage dans laquelle le premier montage de pale (17a-c) et le deuxième montage de pale (16a-c) sont espacés l'un de l'autre, et une position de montage dans laquelle le premier montage de pale est aligné avec le deuxième montage de pale pour être montés l'un sur l'autre, dans lequel le procédé comprend l'expédition de la grue flottante (1) vers une fondation d'éolienne (20) en mer, au moyen du levage par la grue (5) de l'ensemble (10) depuis le pont et l'installation de la tour (11) de celui-ci sur la fondation d'éolienne, et l'inclinaison (R) de la pale de sa position de stockage à sa position de montage selon le mouvement d'inclinaison pur, moyennant quoi le premier montage de pale (17a-c) et le deuxième montage de pale (16a-c) s'alignent, et le montage du premier montage de pale et du deuxième montage de pale l'un sur l'autre.

9. Procédé selon la revendication 8, dans lequel dans une projection parallèle à l'axe longitudinal (A) de la tour (11), le deuxième montage de pale (16a-c) s'étend dans la position de stockage à l'extérieur du cercle circonscrit (S) du moyeu (13) de la nacelle (12) rotative, dans lequel le procédé comprend le montage de l'une des pales (14a-c) sur le moyeu (13), et ensuite la rotation de la nacelle (12) avec la pale montée pour l'aligner avec la pale (14a-c) dans le support de pale (50) tandis que cette pale est dans sa position de stockage.

10. Procédé selon la revendication 8 ou 9, dans lequel l'ensemble comprend un support de bout de pale (30) qui fixe la pale (14a-c) dans la position de stockage au niveau de son bout (19a-c) fixé à la tour (11).

11. Procédé selon l'une quelconque des revendications 8 à 10, dans lequel le support de pale (50) comprend pour chaque pale (14a-c) un premier dispositif de maintien (54a-c) et une charnière (58) entre le premier dispositif de maintien (54a-c) et le deuxième dispositif de maintien (60) ayant son axe de charnière (C) perpendiculaire à l'axe longitudinal (A) de la tour (11), dans lequel chaque axe de charnière (C) a une distance fixe vis-à-vis à la fois du premier dispositif de maintien (54a-c) et du deuxième dispositif de maintien (60) lors d'une fixation par charnière, dans lequel le procédé comprend pour chaque pale (14a-c) l'inclinaison de la pale de sa position de stockage à sa position de montage et le montage de la pale sur le moyeu (13).

12. Procédé selon l'une quelconque des revendications 8 à 11, dans lequel la grue (5) garde l'ensemble (10) avec sa tour (11) dressée au-dessus de la fondation d'éolienne (20) et espacée d'elle, dans lequel des câbles de traction (203) sont tendus entre la fondation d'éolienne et la base de la tour, dans lequel les câbles de traction tirent la tour vers la fondation d'éolienne.

13. Procédé selon l'une quelconque des revendications 8 à 12, dans lequel le support de pale (50) est retiré de l'éolienne après le montage des pales (14a-c) sur le moyeu (13).

14. Procédé selon l'une quelconque des revendications 8 à 13, dans lequel la coque (3) de la grue flottante (1) est à flot pendant l'opération de hissage de la grue (5).

15. Procédé selon l'une quelconque des revendications 8 à 14, dans lequel la grue flottante (1) comprend sur le pont (4) de multiples ensembles (10) pour installer des éoliennes, dans lequel le procédé comprend l'installation consécutive des ensembles (10) sur les fondations d'éolienne (20) dédiées, dans lequel, de préférence, pour chaque éolienne les pales (14a-c) sont montées sur le moyeu (13) après que la grue flottante (1) a quitté la tour (11) installée pour l'installation de l'ensemble (10) suivant.
